# EUROPÄISCHE PATENTSCHRIFT

(11) **EP 1 036 502 B1**
(45) Veröffentlichungstag und Bekanntmachung des Hinweises auf die Patenterteilung: **14.09.2005**
(21) Anmeldenummer: 00105157.2
(22) Anmeldetag: 11.03.2000
(51) Int. Cl.: A22C 13/00

(54) **Beschichtete, faserverstärkte Hülle auf Basis von Cellulosehydrat für geräucherte Leberwurst**
Coated, fiber-reinforced casing based on cellulose hydrate for smoked liver sausage
Enveloppes renforcées revêtues à base d'hydrate de cellulose pour saucisses fumées de foie

(30) Priorität: 18.03.1999 DE 19912052
(43) Veröffentlichungstag der Anmeldung: 20.09.2000
(73) Patentinhaber: Kalle GmbH, 65203 Wiesbaden (DE)
(72) Erfinder: Hammer, Klaus-Dieter, Dr., 55120 Mainz (DE); Grolig, Gerhard, Dr., 64546 Mörfelden-Walldorf (DE); Lang, Bernd Adolf, 65193 Wiesbaden (DE); Seelgen, Hans-Werner, 65527 Niedernhausen-Oberjosbach (DE)
(74) Vertreter: Plate, Jürgen

(56) Entgegenhaltungen:
- EP-A- 0 100 056
- EP-A- 0 391 358
- DE-A- 2 313 994
- DE-A- 2 657 833
- DE-A- 2 933 131
- FR-A- 2 005 443
- US-A- 1 678 632
- US-A- 2 181 886
- US-A- 2 961 323
- US-A- 4 525 397

## Beschreibung

Die Erfindung betrifft eine nahtlose, schlauchförmige Wursthülle auf Basis von Cellulosehydrat mit einer durchgehenden Beschichtung aus einem polymeren Material auf ihrer äußeren Oberfläche. Die Hülle ist speziell für Leberwurst vorgesehen.

Beschichtete schlauchförmige Cellulosehydrat-Wursthüllen sind bereits bekannt. So ist die Hülle gemäß der DE-A 32 40 847 außen mit einem fungicid wirkenden Überzug versehen. Er besteht aus dem Reaktionsprodukt eines kationischen Polymers auf Basis von Polyamin, Polyamid und Epichlorhydrin mit einem Alkali-, Erdalkali- oder Ammoniumsalz der Propionsäure, Sorbinsäure, Ascorbinsäure, Benzoesäure, 4-Hydroxy-benzoesäure, 4-Chlor-benzoesäure oder der 4-Methoxy-benzoesäure. Eine nahtlose, schlauchförmige Hülle auf Cellulosehydratbasis mit einer Beschichtung auf der Außen- wie auf der Innenseite ist in der EP-A 001 545 (= US-A 4 287 217) offenbart. Die Innenbeschichtung besteht aus einem thermoplastischen Material und ist praktisch undurchlässig für Wasser und Wasserdampf. Die Außenbeschichtung ist dagegen durchlässig für Wasser und Wasserdampf. Sie enthält ein elastisches Copolymer, bevorzugt ein Acrylat- oder Methacrylat-Copolymer oder ein Butadien-, Isopren- oder Chloropren-Copolymer. Sie bildet keinen geschlossenen Überzug und hat deswegen auch keinerlei Barrierewirkung. Hergestellt wird sie durch Auftragen einer Emulsion, die das Copolymer in Form von Partikeln mit einem Durchmesser von bis zu 0,08 µm enthält, und anschließendes Trocknen. Das Gewicht der Außenbeschichtung liegt allgemein bei 0,5 bis 8,0 g/m². Wegen der undurchlässigen Innenbeschichtung ist die Hülle nicht rauchdurchlässig, so daß eine damit hergestellte Wurst nicht geräuchert werden kann.

Eine Wursthülle, die auf ihrer Außen- oder Innenseite eine Sauerstoff- und Wasserdampf-Barriereschicht trägt, ist in der EP-A 457 178 beschrieben. Die Barriereschicht besteht im wesentlichen aus einem Copolymer auf Basis von Monomeren der Formel H₂C=CR¹-X, wobei R¹ ein Wasserstoffatom oder eine Methylgruppe darstellt und X für O-CO-(C₁-C₂₀)Alkyl oder CO-O-(C₁-C₂₀)Alkyl steht. Das Copolymer kann darüber hinaus noch Einheiten aus (Meth)acrylsäure oder (Meth)acrylnitril enthalten. Besonders bevorzugt sind Copolymere aus Butylacrylat, Methylmethacrylat und Acrylsäure. Die Barriereschicht bildet einen geschlossenen Überzug und hat ein Flächengewicht von mindestens 12 g/m², vorzugsweise mindestens 14 g/m². In ihren Barriereeigenschaften erreicht sie nahezu eine Polyvinylidenchlorid(PVDC)-Schicht. Rauchdurchlässig ist auch diese Hülle nicht.

Für nicht geräucherte Leberwurst werden üblicherweise Hüllen mit einer hohen Barrierewirkung für Sauerstoff und Wasserdampf verwendet, denn das Leberwurstbrät ist besonders empfindlich gegenüber Luftsauerstoff und trocknet relativ leicht aus. Oxidation ist erkennbar an einer Grünfärbung der Brätoberfläche, Austrocknung an einer Braunfärbung. Bei Verwendung von Hüllen mit besonders effektiven Barriereschichten, insbesondere mit PVDC-Schichten, besteht nur noch eine geringe Gefahr der Verfärbung und des Gewichtsverlustes durch Austrocknen.

Für geräucherte Leberwurst wurden bisher vor allem Cellulosehydrathüllen verwendet, die auch faserverstärkt sein können, daneben auch Kollagenhüllen oder Naturdärme. Bekannt sind auch Leberwursthüllen aus acrylatbeschichtetem Gewebe, die zu Schläuchen abgenäht sind. All diese Hüllen sind durchlässig für Rauch, allerdings auch für Sauerstoff und Wasserdampf. Als Folge davon verfärbt sich das Leberwurstbrät darin bereits nach wenigen Tagen und verliert an Qualität.

Es bestand daher die Aufgabe, eine nahtlose, schlauchförmige, Hülle für geräucherte Leberwurst zu schaffen. Sie soll beständig sein gegen kochendes Wasser und Heißdampf, durchlässig für Heiß- und Kaltrauch und ausreichend undurchlässig für Sauerstoff und Wasserdampf, damit die Wurst mindestens 3 bis 5 Tage im Kühlraum gelagert werden kann, bevor sie mit einer Zweitverpackung umgeben wird. Sie soll ferner das Austrocknen der Wurst so weit wie möglich verhindern. Schließlich soll sie das Leberwurstbrät vor Lichteinwirkung schützen und das Fett/Eiweiß-Gleichgewicht nicht beeinflussen, damit sich kein Fett aus dem Brät absetzt. Nicht zuletzt soll die Hülle prall und faltenfrei anliegen und sich gut abschälen lassen, ohne dabei zum Einreißen oder Weiterreißen zu neigen. Aus ökologischen Gründen soll die Hülle auch noch frei von chlorhaltigen Verbindungen, wie PVDC, sein. Die gleichzeitige Lösung all dieser Aufgaben wurde bisher für unmöglich gehalten.

Nunmehr wurde jedoch gefunden, daß sie sich lösen läßt mit einer dünnen Außenbeschichtung aus einem synthetischen Polymer oder Copolymer. Gegenstand der vorliegenden Anmeldung ist somit eine nahtlose, schlauchförmige Wursthülle auf Basis von Cellulosehydrat mit einer durchgehenden Beschichtung aus einem polymeren Material auf ihrer äußeren Oberfläche, die dadurch gekennzeichnet ist, daß sie für Heiß- und Kaltrauch durchlässig ist und daß die Beschichtung eine Dicke von 3 bis 10 µm aufweist. Die Beschichtung umfaßt vorzugsweise ein Homo- oder Copolymer aus bzw. mit Einheiten von Monomeren der Formel H₂C=CR¹-X, worin R¹ ein Wasserstoffatom oder eine Methylgruppe und X O-CO-R² oder CO-O-R² darstellt, wobei R² für (C₁-C₁₀)Alkyl, bevorzugt (C₁-C₅)Alkyl, steht.

Zusätzlich können in dem Polymer Einheiten aus anderen Vinyl-Monomeren vorkommen. Der Anteil dieser anderen Einheiten beträgt allgemein bis zu 45 Gew.-%, bevorzugt bis zu 30 Gew.-%, jeweils bezogen auf das Gesamtgewicht des Polymers. Bei den anderen Vinylmonomeren handelt es sich vorzugsweise um solche der genannten Formel, in denen X für OH, CO₂H, CO-NH-(C₁-C₁₀)-Alkyl oder CN steht. Der Anteil der (Meth)acrylsäure- und der (Meth)acrylnitrilEinheiten ist im allgemeinen relativ gering. Bei den (Meth)acrylsäure-Einheiten beträgt er 0,1 bis 20 Gew.-%, bevorzugt 0,5 bis 10 Gew.-%, und bei den (Meth)acrylnitril-Einheiten 0,1 bis 35 Gew.-%, bevorzugt 1,0 bis 20 Gew.-%, jeweils bezogen auf das Gesamtgewicht des Polymers. Die anderen Vinylmonomere können auch gegebenenfalls substituierte Styrole, (C₂-C₈)Alkene (speziell Ethylen oder Propylen) und/oder konjugierte (C₄-C₁₀)Alkadiene (speziell Butadien oder Isopren) sein. Mit Hilfe von polyfunktionellen Verbindungen, insbesondere polyfunktionellen Aziridinen, lassen sich die (Meth)acrylat-Polymere vernetzen und mit der Celluloseoberfläche verknüpfen. Die Bezeichnung "(Meth)acrylat" steht in diesem Zusammenhang für "Acrylat und/oder Methacrylat". Entsprechendes gilt für "(Meth)acrylsäure", "(Meth )acrylamid", "(Meth )acrylnitril" usw.

Das Polymer ist vorzugsweise hydrophil. Sein mittleres Molekulargewicht M_{w} ist relativ hoch, d.h. über 200.000, bevorzugt über 500.000. Geeignet sind schließlich auch Polyesterurethane, wie sie aus einem Polyesterdiol, einem Kettenverlängerer und einem Di- oder Triisocyanat herstellbar sind. Die Polyesterdiole sind dabei vorzugsweise aus einem geradkettigen (C₃-C₁₀)Diol (speziell Butan-1,4-diol oder Hexan-1,6-diol) und einer (C₃-C₈)Dicarbonsäure (speziell Adipinsäure) gebildet. Als Kettenverlängerer eignen sich unter anderen Diole und Diamine, wie Hexamethylendiamin. Das Di- oder Triisocyanat ist bevorzugt Hexamethylendiisocyanat, Bis-(4-isocyanatocyclohexyl)-methan, Diphenylmethan-4,4'-diisocyanat oder Naphthalin-1,4-, -1,5- oder -2,6-diisocyanat.

In einer bevorzugten Ausführungsform enthält die Beschichtung daneben noch Farbstoffe oder Pigmente, die das Brät vor Lichteinwirkung schützen. Sie absorbieren daher Licht im sichtbaren Bereich des Spektrums, bevorzugt auch UV-Strahlung. Die Pigmente können anorganischer oder organischer Art sein. Bevorzugt sind jedoch organische Pigmente, beispielsweise Azopigmente (erhältlich unter der Bezeichnung ®Novofil von der Hoechst AG).

Die Farbstoffe oder Pigmente dienen insbesondere dazu, die für Leberwursthüllen typische ockerfarbene oder gelb-braune Färbung zu erreichen. Der Anteil der Pigmente und/oder Farbstoffe beträgt allgemein 0,5 bis 12,0 Gew.-%, bevorzugt 1,0 bis 6,0 Gew.-%, jeweils bezogen auf das Gesamtgewicht der nichtflüchtigen Bestandteile der Beschichtung. Schließlich kann die Außenbeschichtung noch übliche Additive in untergeordneten Mengen (zusammen bis zu 10 Gew.-%, bezogen auf das Gesamtgewicht der Beschichtung) enthalten. So kann beispielsweise durch einen geringen Anteil an Aluminiumsilikat (Kaolin) ein Verkleben der flachgelegten und aufgerollten Hülle verhindert werden.

Auf der Innenseite ist die erfindungsgemäße Hülle in der Regel nicht beschichtet oder imprägniert, keinesfalls ist sie jedoch innen mit einer Imprägnierung oder Beschichtung versehen, die die Rauchdurchlässigkeit beeinträchtigt.

Herstellen läßt sich die Außenbeschichtung nach Verfahren, die dem Fachmann allgemein geläufig sind. So ist es möglich, eine Lösung des polymeren Materials in einem organischen Lösemittel (bevorzugt Ethanol, Ethylacetat, Propylacetat oder Ethyllactat) auf die Cellulosehydrathülle aufzutragen und dann das Lösemittel zu entfernen. Für dieses Beschichtungsverfahren sind besonders die genannten Polyesterurethane geeignet. Alternativ dazu ist auch eine wäßrige Dispersion des polymeren Materials verwendbar. Zum Auftragen der Beschichtung kann die flachgelegte schlauchförmige Hülle durch ein Bad mit der beschriebenen Lösung oder Dispersion geführt werden. Die Dicke der Beschichtung läßt sich durch Einstellen des Walzenspalts und durch eine Luftrakel regulieren. Getrocknet und damit verfestigt wird die Beschichtung vorzugsweise in einem Heißlufttrockner, wie er in der DE-A 30 12 064 beschrieben ist. Es ist ferner möglich, die Außenbeschichtung über eine Ringdüse und eine Luftrakel auf die aufgeblasene Hülle aufzubringen. Verfestigen und Trocknen erfolgen dann wieder wie beschrieben. Als besonders einfach und kostengünstig hat es sich erwiesen, die Beschichtung durch vollflächiges Bedrucken aufzubringen. Dazu eignet sich besonders ein Flexodruckverfahren. Das Bedrucken kann ein- oder mehrmals wiederholt werden, so daß die Beschichtung auch aus mehreren Einzelschichten bestehen kann, die gegebenenfalls eine unterschiedliche Zusammensetzung aufweisen. So kommen die Farbstoffe und/oder Pigmente nicht notwendig in allen Einzelschichten vor. Die Gesamtdicke der Außenbeschichtung beträgt bevorzugt 4 bis 8 µm, besonders bevorzugt 4 bis 6 µm. Es ist wichtig, daß die Beschichtung gleichmäßig und streifenfrei ist.

Das Cellulosehydrat-Basismaterial enthält eine Faserverstärkung, die bevorzugt aus Hanffasem besteht. Die Viskose kann auf die Faserverstärkung von außen, von innen oder von beiden Seiten aufgetragen sein (sog. außen-, innen- oder doppelviskosierte Hüllen).

Die nicht beschichtete Cellulosehülle hat bei 23 °C und 85 % relativer Feuchte (r.F.) eine Wasserdampfdurchlässigkeit von 1.700 bis 2.000 g pro Quadratmeter und pro Tag (bestimmt gemäß DIN 53 122) und eine Permeation bei 40 bar von 105 bis 110 I pro Quadratmeter und pro Tag. Die Sauerstoffdurchlässigkeit beträgt bei 23 °C und 85 % r.F. 200 bis 220 cm³ pro Quadratmeter und pro Tag bei einem Innendruck von 1 bar, bei 23 °C und 53 % r.F. sogar nur 15 bis 20 cm³/m² d bar (bestimmt gemäß DIN 53 380). Die erfindungsgemäße Hülle zeigt demgegenüber deutlich höhere Barrierewerte. Bei 23 °C und 85 % r.F. beträgt ihre Wasserdampfdurchlässigkeit 800 bis 1.200 g/m² d, ihre Permeation bei 40 bar 75 bis 100 l/m² d und ihre Sauerstoffdurchlässigkeit 150 bis 170 cm³/m² d bar bei 23 °C und 85 % r.F. und 8 bis 12 cm³/m² d bar bei 23 °C und 53 % r.F. Diese Barriereeigenschaften reichen aus, um die Leberwürste nach dem Kochen und Räuchern 4 bis 7 Tage unter Kühlraumbedingungen zu lagern, ohne daß sie sich dabei verfärben, stark an Gewicht verlieren oder sich anderweitig verschlechtern. Die erfindungsgemäße Hülle ist für heißen wie für kalten Rauch gleichermaßen gut durchlässig. Der Gewichtsverlust der mit der erfindungsgemäßen Hülle hergestellten Leberwürste beträgt beim Kochen im Dampfschrank nur noch 0,8 bis 1,2 %, während er bei den Leberwürsten in unbeschichteten Cellulosehüllen bei 8 bis 10 % liegt. Beim Kochen im Kessel und anschließendem Kalträuchern beträgt der Verlust nur noch 0,8 bis 1,2 %, verglichen mit 3,5 bis 5 % bei den Leberwürsten in den nichtbeschichteten Hüllen. Nach wenigen Tagen werden die Leberwürste dann wie üblich mit einer Zweitverpackung versehen.

Bisher wurde stets davon ausgegangen, daß mit der Wasserdampf- und Sauerstoffbarriere auch die Barriere für Geschmacks- und Aromastoffe des Rauchs ansteigt. Das ist bei den erfindungsgemäßen Hüllen jedoch überraschenderweise nicht der Fall. Es wird vermutet, daß sich die Geschmacks- und Aromastoffe in dem polymeren Material lösen und so durch die Hülle hindurch wandern, daß sie also praktisch über einen Brückenmechanismus durch die Polymerbeschichtung transportiert werden.

In den folgenden Beispielen sind Prozente als Gewichtsprozente zu verstehen, soweit nicht anders angegeben.

### Beispiel 1:

Ein außenviskosierter, unpigmentierter Faserdarm vom Kaliber 40 mit einer Flachbreite von 60 mm wurde im Flexodruckverfahren dreimal beidseitig vollflächig bedruckt. Beim ersten Bedrucken wurde eine 2 µm dicke Schicht aufgetragen aus
- 95 %: unpigmentiertem, modifiziertem Acrylat-Grundpolymer (90 WD 013 von Schmidt-Druckfarben, Frankfurt) und
- 5 %: polyfunktionellem Aziridin-Vernetzer (90 LG 973-WD von Schmidt-Druckfarben).

Im zweiten Schritt wurde eine ebenfalls 2 µm dicke Schicht aufgedruckt aus
- 40 %: einem unpigmentierten, modifizierten Acrylat-Grundpolymer (90 WD 013),
- 40 %: einer weißpigmentierten Dispersion 10 WD 015 von Schmidt-Druckfarben,
- 10 %: einer gelbpigmentierten Dispersion 20 WD 017,
- 5 %: einer orangepigmentierten Dispersion 20 WD 018 und
- 5 %: Vernetzer 90 LG 973-WD.

Zuletzt aufgedruckt wurde eine 1,5 µm dicke Schicht aus
- 70 %: gelbpigmentierter Dispersion 20 WD 017,
- 22 %: rotpigmentierter Dispersion 30 WD 015-2
- 3 %: schwarzpigmentierter Dispersion 80 WD 013 und
- 5 %: Vernetzer 90 LG 973-WD.

Die Barrierewerte der so hergestellten nahtlosen Wursthülle betrugen:

| | | |
|---|---|---|
| Wasserdampfdurchlässigkeit | | 915 g/m² d |
| Sauerstoffdurchlässigkeit | bei 23 °C und 53 % r.F. | 10 cm³/m² d bar |
| | dgl. bei 85 % r.F. | 160 cm³/m² d bar |
| Permeation bei 40 bar | | 90 l/m² d |

Die so bedruckte Hülle wurde mit Leberwurstbrät gefüllt, die Wurst anschließend im Dampfschrank bzw. im Kessel gekocht und kalt geräuchert. Dabei wurden folgende Gewichtsabnahmen festgestellt:
nach dem Kochen im Dampfschrank: 0,8 %
   - und nachfolgendem Kalträuchern: 2,2 %
nach dem Kochen im Kessel: 0,5 %
   - und nachfolgendem Kalträuchem: 1,7 %

Nach 5 Tagen Lagerung im Kühlraum (6 - 8 °C, 80 % r.F.) war keine Verfärbung der Brätoberfläche festzustellen. In der nach dieser Zeit hinzugefügten Zweitverpackung war die Leberwurst über mehrere Wochen lagerfähig.

### Beispiel 2:

Auf einen außenviskosierten Faserdarm von Kaliber 45 mit einer Flachbreite von 73 mm wurden 3 Schichten im Flexodruckverfahren aufgedruckt, und zwar zuerst eine 1,5 µm dicke Schicht aus
- 95 %: unpigmentiertem Acrylat-Grundpolymer 90 WD 013 und
- 5 %: Vernetzer 90 LG 973 WD;
dann eine 2 µm dicken Schicht aus
- 70 %: gelbpigmentierter Dispersion 20 WD 017,
- 22 %: rotpigmentierter Dispersion 30 WD 015,
- 3 %: schwarzpigmentierter Dispersion 80 WD 013 und
- 5 %: Vernetzer 90 LG 973-WD.

Die 3. Schicht war in der Zusammensetzung mit der 1. Schicht identisch, ihre Dicke betrug jedoch 3 µm.

Die Barrierewerte des bedruckten Faserdarms auf Cellulosebasis waren wie folgt:

| | | |
|---|---|---|
| Wasserdampfdurchlässigkeit | | 880 g/m² d |
| Sauerstoffdurchlässigkeit | bei 23 °C und 53 % r.F. | 8 cm³/m² d bar |
| | dgl. bei 85 % r.F. | 120 cm³/m² d bar |
| Permeation bei 40 bar | | 78 l/m² d |

Die Hülle wurde dann wie im Beispiel 1 mit Leberwurstbrät gefüllt, gekocht und kalt geräuchert. Die Gewichtsabnahme betrug
nach dem Kochen im Dampfschrank: 0,6 %
- und nachfolgendem Kalträuchern: 2,1 %
nach dem Kochen im Kessel: 0,5 %
- und nachfolgendem Kalträuchem: 1,5 %.

Nach fünftägiger Lagerung im Kühlraum war die Farbe der Brätoberfläche unverändert. In einer Zweitverpackung war die Leberwurst problemlos 8 Wochen lagerfähig.

### Beispiel 3:

Auf die Außenseite eines außenviskosierten, ockerfarbenen, schlauchförmigen Cellulosehydrat-Faserdarms vom Kaliber 55 mit einer Flachbreite von 86 mm wurde vor dem Eintritt in den Trockner eine 1,25 %ige Polyamin-Polyamid-Epichlorhydrin-Harzlösung angetragen (Walzenantrag). Der Gelschlauch wurde dann wie üblich getrocknet, auf die gewünschte Restfeuchte eingestellt ("konditioniert") und aufgewickelt.

Der flachgelegte Schlauch wurde dann durch eine Wanne geführt, die eine wäßrige Dispersion der folgenden Zusammensetzung enthielt:

| | |
|---|---|
| 0,750 kg | Glycerin, |
| 0,125 kg | Kaolin (^{(R)}Glomax JDF), |
| 0,650 kg | Ca-Stearat (^{(R)}Lubranil CA 50 von Süddeutsche Emulsions-Chemie GmbH, Mannheim), |
| 1,000 kg | PVC-Latex, |
| 1,500 kg | Paraffinwachs-Emulsion (Michem Lube ML 182 von Michelman Intl. & Co., Norwegen), |
| 25,000 kg | Styrol-Butadien-Acrylsäure-Copolymer (®Styrofan DS 2306 der BASF AG) und |
| 25,000 kg | vollentsalztes Wasser ("VE-Wasser") |

Die Dicke der Außenbeschichtung wurde durch Regulieren des Walzenspalts auf etwa 6 µm eingestellt. Der so beschichtete Schlauch passierte dann einen senkrecht angeordneten Heißlufttrockner. Nach dem Konditionieren mit Dampf wurde die Wursthülle aufgewickelt.

Die Eigenschaften der Hülle (Wasserdampf- und Sauerstoffdurchlässigkeit, Permeation, Gewichtsverluste nach dem Füllen) waren praktisch die gleichen wie bei den Hüllen gemäß den Beispielen 1 und 2.

## Patentansprüche

1. Nahtlose, schlauchförmige Wursthülle auf Basis von Cellulosehydrat mit einer durchgehenden Beschichtung aus einem polymeren Material auf ihrer äußeren Oberfläche, **dadurch gekennzeichnet, daß** sie für Heiß- und Kaltrauch durchlässig ist und die Beschichtung eine Dicke von 3 bis 10 µm aufweist.

2. Wursthülle gemäß Anspruch 1, **dadurch gekennzeichnet, daß** die Beschichtung ein Homo- oder Copolymer aus bzw. mit Einheiten aus Monomeren der Formel H₂C=CR¹-X umfaßt, worin R¹ ein Wasserstoffatom oder eine Methylgruppe und X eine O-CO-R² oder CO-O-R ² darstellt, wobei R² (C₁-C₁₀)Alkyl, bevorzugt (C₁-C₅)Alkyl, ist.

3. Wursthülle gemäß Anspruch 2, **dadurch gekennzeichnet, daß** das Copolymer zusätzlich Einheiten aus Monomeren der Formel H₂C=CR¹-X umfaßt, worin R¹ ein Wasserstoffatom oder eine Methylgruppe und X für OH, CO₂H, CO-NH-(C₁-C₁₀)Alkyl oder CN steht, aus gegebenenfalls substituierten Styrolen, aus (C₂-C₈)Alkenen und/oder aus konjugierten (C₄-C₁₀)Alkadienen enthält.

4. Wursthülle gemäß Anspruch 3, **dadurch gekennzeichnet, daß** der Anteil der zusätzlichen Einheiten bis zu 45 Gew.-%, bevorzugt bis zu 30 Gew.-%, beträgt, jeweils bezogen auf das Gesamtgewicht des Polymers.

5. Wursthülle gemäß Anspruch 1, **dadurch gekennzeichnet, daß** die Beschichtung Polyesterurethane umfaßt.

6. Wursthülle gemäß einem oder mehreren der Ansprüche 1 bis 4, **dadurch gekennzeichnet, daß** die Dicke der Beschichtung 4 bis 8 µm, bevorzugt 4 bis 6 µm, beträgt.

7. Wursthülle gemäß einem oder mehreren der Ansprüche 1 bis 6, **dadurch gekennzeichnet, daß** die Beschichtung aus mehreren Einzelschichten besteht.

8. Wursthülle gemäß Anspruch 1 oder 7, **dadurch gekennzeichnet, daß** die Beschichtung oder mindestens eine Schicht davon Farbstoffe und/oder Pigmente enthält.

9. Wursthülle gemäß einem oder mehreren der Ansprüche 1 bis 8, **dadurch gekennzeichnet, daß** ihre Wasserdampfdurchlässigkeit bei 23 °C und 85 % r.F. 800 bis 1.200 g/m² d, ihre Permeation bei 40 bar 95 bis 100 l/m²d und ihre Sauerstoffdurchlässigkeit 150 bis 170 cm³/m² d bar bei 23 °C und 85 % r.F. und 8 bis 12 cm³/m² d bar bei 23 °C und 53 % r.F. beträgt.

10. Wursthülle gemäß einem oder mehreren der Ansprüche 1 bis 9, **dadurch gekennzeichnet, daß** das Cellulosehydrat-Basismaterial eine Faserverstärkung enthält, die bevorzugt aus Hanffasem besteht.

11. Wursthülle gemäß Anspruch 10, **dadurch gekennzeichnet, daß** auf die Faserverstärkung die Viskose von außen, von innen oder von beiden Seiten aufgetragen wird.

12. Verwendung der Wursthülle gemäß einem oder mehreren der Ansprüche 1 bis 11 für geräucherte Leberwurst.

## Claims

1. A seamless, tubular sausage casing based on cellulose hydrate having a continuous coating made of a polymeric material on its outer surface, wherein the casing is permeable to hot smoke and cold smoke and the coating has a thickness of from 3 to 10 µm.

2. The sausage casing as claimed in claim 1, wherein the coating comprises a homopolymer or copolymer consisting of or comprising units of monomers of the formula H₂C=CR¹-X, where R¹ is a hydrogen atom or a methyl group and X is O-CO-R² or CO-O-R², where R² is (C₁-C₁₀)alkyl, preferably (C₁-C₅)alkyl.

3. The sausage casing as claimed in claim 2, wherein the copolymer additionally comprises units of monomers of the formula H₂C=CR¹-X, where R¹ is a hydrogen atom or a methyl group and X is OH, CO₂H, CO-NH-(C₁-C₁₀)alkyl or CN, units of unsubstituted or substituted styrenes, of (C₂-C₈)alkenes and/or of conjugated (C₄-C₁₀)alkadienes.

4. The sausage casing as claimed in claim 3, wherein the proportion of the additional units is up to 45% by weight, preferably up to 30% by weight, in each case based on the total weight of the polymer.

5. The sausage casing as claimed in claim 1, wherein the coating comprises polyesterurethanes.

6. The sausage casing as claimed in one or more of claims 1 to 4, wherein the thickness of the coating is from 4 to 8 µm, preferably from 4 to 6 µm.

7. The sausage casing as claimed in one or more of claims 1 to 6, wherein the coating consists of a plurality of individual layers.

8. The sausage casing as claimed in claim 1 or 7, wherein the coating or at least one layer thereof comprises dyes and/or pigments.

9. The sausage casing as claimed in one or more of claims 1 to 8, wherein its water vapor permeability at 23°C and 85% RH is from 800 to 1200 g/m²·d, its permeation at 40 bar is from 95 to 100 l/m²·d and its oxygen permeability is from 150 to 170 cm³/m²·d bar at 23°C and 85% RH and from 8 to 12 cm³/m²·d bar at 23°C and 53% RH.

10. A sausage casing as claimed in one or more of claims 1 to 9, wherein the cellulose hydrate base material comprises a fiber reinforcement, preferably hemp fibers.

11. A sausage casing as claimed in claim 10, wherein the viscose is applied to the fiber reinforcement from the outside, from the inside or from both sides.

12. The use of the sausage casing as claimed in one or more of claims 1 to 10 for smoked liver sausage.

## Revendications

1. Enveloppe pour saucisses tubulaire sans couture, à base d'hydrate de cellulose avec un revêtement continu en matériau polymère sur sa surface extérieure, **caractérisée en ce qu'**elle est perméable à la fumée chaude et à la fumée froide et que le revêtement a une épaisseur de 3 à 10 µm.

2. Enveloppe pour saucisses selon la revendication 1, **caractérisée en ce que** le revêtement comprend un homo-polymère ou un copolymère formé ou comprenant des unités issues de monomères de la formule H₂C=CR¹-X, dans laquelle R¹ représente un atome d'hydrogène ou un groupe de méthyle et X représente un O-CO-R² ou CO-O-R², sachant que R² est un alkyle (C₁-C₁₀), de préférence un alkyle (C₁-C₅).

3. Enveloppe pour saucisses selon la revendication 2, **caractérisée en ce que** le copolymère comprend en outre des unités issues de monomères de la formule H₂C=CR¹-X, dans laquelle R¹ représente un atome d'hydrogène ou un groupe de méthyle et X représente OH, CO₂H, CO-NH-(C₁-C₁₀) alkyle ou CN, des unités de styrènes le cas échéant substitués, d'alcènes (C₂-C₈) et/ou d'alcadiènes (C₄-C₁₀).

4. Enveloppe pour saucisses selon la revendication 3, **caractérisée en ce que** la proportion d'unités supplémentaires est d'au plus 45 % en poids, de préférence 30 % en poids, respectivement par rapport au poids total du polymère.

5. Enveloppe pour saucisses selon la revendication 1, **caractérisée en ce que** le revêtement comprend du polyuréthane.

6. Enveloppe pour saucisses selon une ou plusieurs des revendications 1 à 4, **caractérisée en ce que** le revêtement présente une épaisseur de 4 à 8 µm, de préférence de 4 à 6 µm.

7. Enveloppe pour saucisses selon une ou plusieurs des revendications 1 à 6, **caractérisée en ce que** le revêtement est composé de plusieurs couches individuelles.

8. Enveloppe pour saucisses selon la revendication 1 ou 7, **caractérisée en ce que** le revêtement ou au moins l'une des ses couches, contient des colorants et/ou pigments.

9. Enveloppe pour saucisses selon une ou plusieurs des revendications 1 à 8, **caractérisée en ce que** sa perméabilité à la vapeur d'eau à 23°C et 85 % H.R. (Humidité relative) est de 800 à 1200 g/m² d, sa perméation à 40 bar est de 95 à 100 l/m² d et sa perméabilité à l'oxygène est de 150 à 170 cm³/m² d bar à 23°C et 85 % H R et de 8 à 12cm³/m² d bar à 23°C et 53 % H.R.

10. Enveloppe pour saucisses selon une ou plusieurs des revendications 1 à 9, **caractérisée en ce que** le matériau à base d'hydrate de cellulose contient un renfort de fibres, composé de préférence de fibres de chanvre.

11. Enveloppe pour saucisses selon la revendication 10, **caractérisée en ce que** la viscose est appliquée sur le renfort de fibres de l'extérieur, de l'intérieur ou des deux côtés.

12. Utilisation de l'enveloppe pour saucisses selon l'une des revendications 1 à 11 pour du pâté de foie fumé.
